## Europäisches Patentamt

## European Patent Office

## Office européen des brevets

(19)

(11) Veröffentlichungsnummer: **0 028 771**
**B1**

(12)

# EUROPÄISCHE PATENTSCHRIFT

(45) Veröffentlichungstag der Patentschrift:
**10.11.82**

(51) Int. Cl.³: **C 09 J 7/02**

(21) Anmeldenummer: **80106659.8**

(22) Anmeldetag: **30.10.80**

(54) Klebeband.

(30) Priorität: **08.11.79 DE 7931547 U**

(43) Veröffentlichungstag der Anmeldung:
**20.05.81 Patentblatt 81/20**

(45) Bekanntmachung des Hinweises auf die Patenterteilung:
**10.11.82 Patentblatt 82/45**

(84) Benannte Vertragsstaaten:
**AT BE CH DE FR GB IT LI NL SE**

(56) Entgegenhaltungen:
**GB-A-1 005 547**

(73) Patentinhaber: **HOECHST AKTIENGESELLSCHAFT,**
**Postfach 80 03 20, D-6230 Frankfurt/Main 80 (DE)**

(72) Erfinder: **Dettmer, Gerhard, Am Lauterbach 30,**
**D-6204 Taunusstein 1 (DE)**
Erfinder: **Hammerschmidt, Peter,**
**Münzenbergstrasse 20, D-6200 Wiesbaden (DE)**

ACTORUM AG

Klebeband

Die Erfindung betrifft ein Klebeband bestehend aus einem Trägerfilm in Form einer geprägten Folie aus synthetischem thermoplastischem Polymerisat und einer Klebeschicht auf der einen Aussenseite des Trägerfilms.

Klebebänder werden hergestellt, indem man auf die eine Aussenseite eines Trägerfilms zunächst haftvermittelnde chemische Substanz aufbringt und dann auf die derart vorpräparierte Oberfläche des Trägerfilms eine Schicht aus Klebemittel aufbringt.

Diese haftvermittelnde Vorgrundierung dient zur festen Verankerung der Klebemittelschicht mit dem Trägerfilm. Beim Aufwickeln des Klebebandes zu einer mehrlagigen Klebebandrolle – auch Wickel genannt – bildet die klebeschichtfreie Aussenseite des Klebebandes die Rollenaussenseite. Beim Abwickeln des Klebebandes von der Rolle besteht nun die Gefahr, dass die Klebeschicht einer Wickellage dadurch zerstört wird, dass sie ganz oder teilweise auf die klebeschichtfreie Aussenseite der benachbarten Wickellage der Klebebandrolle übertragen wird.

Um diesen Nachteil zu beheben, ist es üblich, auf die klebeschichtfreie Aussenseite der Trägerfolie des Klebebandes eine anti-adhesive Schicht aus chemischem Material aufzubringen; durch diese Schicht wird beim Aufrollen des Klebebandes zu einer Klebebandrolle die Haftkraft im Bereich der Phasengrenzfläche benachbarter Rollenlagen derart verringert, dass das Klebeband beim Wiederabwickeln von der Rolle nicht reisst; die anti-adhesive Schicht hat jedoch zur Folge, dass insbesondere bei schnellem Abwickeln des Klebebandes von der Rolle ein störend starkes Abrollgeräusch auftritt, das die mit dieser Tätigkeit beschäftigten Arbeiter belastet. Wegen des auf ihr befindlichen anti-adhesiven Belags ist die klebeschichtfreie Aussenseite des Trägerfilms nicht bedruckbar.

Der Erfindung liegt die Aufgabe zugrunde, ein aus einer Trägerfolie und einer auf ihrer einen Aussenseite angeordneten Klebeschicht aufgebautes Klebeband vorzuschlagen, bei dem die andere klebstofffreie Aussenseite der Trägerfolie des Bandes bedruckbar ist, sich von einer Rolle mit relativ geringem Kraftaufwand und ohne dass dabei die Klebeschicht des Klebebandes beschädigt wird, abwickeln lässt und bei der beim schnellen Abwickeln des Bandes von einer Bandrolle mit dem Ziel, kleinere Bandrollen herzustellen, kein störend lautes Geräusch entsteht.

Die der Erfindung zugrunde liegende Aufgabe wird gelöst durch ein Klebeband der in Anspruch 1 angegebenen Ausbildung.

Besonders vorteilhafte Ausgestaltungen der Erfindung sind in Anspruch 2 bis 5 angegeben.

Der Trägerfilm des erfindungsgemässen Erzeugnisses besteht aus einer Folie aus synthetischem thermoplastischem Polymerisat, bevorzugt einer solchen aus Polypropylen oder Polyvinylchlorid, insbesondere bevorzugt einer aus Polyvinylchlorid, die eine Dicke von kleiner als 35 μm, vorteilhaft eine Dicke von 25 bis 30 μm besitzt. Die Trägerfolie ist vorzugsweise durch herstellungsbedingtes Strecken orientiert, insbesondere vorteilhaft ist sie herstellungsbedingt biaxial streckorientiert.

Der Trägerfilm besitzt wenigstens auf einer Aussenseite profilierende, durch Prägung der Folie gebildete Erhebungen über die gesamte Länge und Breite der Trägerfolie gleichmässig verteilt. Die Erhebungen haben jeweils gleiche Tiefe im Bereich von 5 bis 20 μm.

Insbesondere soll unter einer geprägten Folie eine solche verstanden werden, deren eine Aussenseite eine Vielzahl von Erhebungen umfasst, die jeweils gegengleich ausgebildeten Vertiefungen auf der anderen Folienseite entsprechen.

Zwischen den Erhebungen auf der einen Folienseite bzw. den gegengleichen Vertiefungen auf der anderen, erstrecken sich jeweils ebene Folienbereiche.

In bevorzugter Ausgestaltung der Erfindung hat die Klebebandträgerfolie demnach eine ausschliesslich Erhebungen aufweisende erste Aussenseite und eine zweite, die ausschliesslich Vertiefungen besitzt, die den bezeichneten Erhebungen gegengleich entsprechen.

Die Klebeschicht befindet sich auf der ungeprägten bzw. auf der ausschliesslich Vertiefungen aufweisenden Aussenseite des Trägerfilms des Klebebandes.

Die ausschliesslich Erhebungen aufweisende Oberfläche der Klebebandträgerfolie ist beschichtungsfrei.

Aus dem erfindungsgemässen Erzeugnis lassen sich durch Aufwickeln Klebebandrollen bilden, von denen sich das Klebeband mit verhältnismässig geringem Kraftaufwand wieder abrollen lässt, ohne dass dabei ein störend starkes Geräusch auftritt und ohne dass die Klebeschicht einer Lage einer Klebebandrolle auf die unbeschichtete Oberfläche der ihr unmittelbar benachbarten Lage derselben gelangt. Die klebemittelfreie Oberfläche des Trägerfilms ist einwandfrei bedruckbar.

Unter Prägetiefe soll definitionsgemäss der lotrechte Abstand zwischen Erhebungsscheitel und Erhebungsbasisebene verstanden werden; dabei entspricht bei planer Lage der Trägerfolie die Erhebungsbasisebene derjenigen, in der die die Basisfläche der Erhebung begrenzende Kante verläuft.

Die Erhebungen haben praktisch gleiche Höhe; ihre Scheitelflächen sind schmal im Vergleich zu ihrer Basisfläche.

Die Erhebungen haben jeweils gleich geformte und bemessene Scheitelflächen. Die Gesamtfläche, die durch die Summe sämtlicher Scheitelflächen gebildet wird, ist gering im Vergleich zur ungeprägten Gesamtfläche der Trägerfolie.

Die ausschliesslich Erhebungen aufweisende Seite der Trägerfolie wird definitionsgemäss als positiv und die andere, ausschliesslich Vertiefungen aufweisende Seite der Trägerfolie als negativ strukturiert ausgebildet bezeichnet.

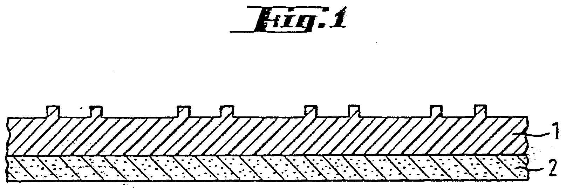

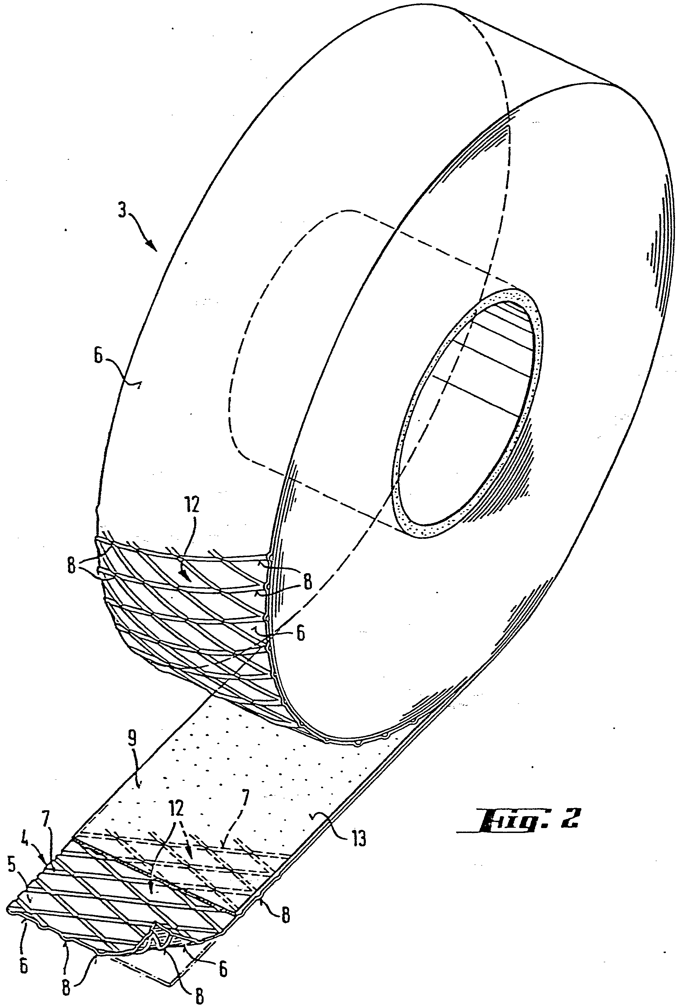

Die Erfindung wird durch die Zeichnung erläutert. Figur 1 der Zeichnung stellt eine mögliche Ausbildungsform der Erfindung dar, bei der die Klebebandträgerfolie auf der der Klebeschicht zugewandten Seite glatt ausgebildet ist und auf der anderen Seite Erhebungen besitzt. Figur 2 verdeutlicht eine zweite mögliche Ausbildung der Erfindung, bei der die Klebebandträgerfolie auf der klebeschichtfreien Seite Erhebungen, auf der mit der Klebeschicht bedeckten Seite den Vorsprüngen gegengleich ausgebildete Vertiefungen besitzt.

In Figur 1 bedeutet 1 den Trägerfilm des Trägerbandes und 2 die Klebeschicht.

In Figur 2 bedeutet 3 zu einer Rolle aufgewikkeltes Klebeband gemäss der Erfindung, wobei 4 die Trägerfolie desselben ist, 5 bedeutet die Vertiefungen aufweisende Seite, 6 die Erhebungen, 8 die aufweisende Seite der Trägerfolie; es sind 7 rillenförmig eingeprägte Vertiefungen, die den wulstförmigen Erhebungen entsprechen. 9 ist die Klebeschicht, 12 ein Rautenmuster und 13 die der Trägerbandoberfläche zugewandte Seite der Klebeschicht 9.

## Patentansprüche

1. Klebeband bestehend aus einem Trägerfilm (1; 4) aus einer Folie aus synthetischem thermoplastischem Polymerisat und einer Klebeschicht (2; 9) auf einer Seite (5) des Trägerfilms (1; 4), dadurch gekennzeichnet, dass der Trägerfilm (1; 4) eine Dicke kleiner als 35 µm besitzt, und auf der der Klebeschicht (2; 9) abgewandten Oberfläche (6) Erhebungen (8) besitzt, die eine Tiefe von 5 bis 20 µm haben.

2. Klebeband nach Anspruch 1, dadurch gekennzeichnet, dass der Trägerfilm (1; 4) auf einer Seite (6) Erhebungen (8) und auf der anderen zu den Erhebungen (8) gegengleich ausgebildete Vertiefungen (7) besitzt, die Erhebungen (8) eine Tiefe von 5 bis 20 µm haben und die Klebeschicht (2; 9) die Trägerfilmoberfläche (5) mit Vertiefungen (7) bedeckt.

3. Klebeband nach Anspruch 1 oder 2, dadurch gekennzeichnet, dass der Trägerfilm (1; 4) biaxial streckorientiert ist.

4. Klebeband nach Anspruch 3, dadurch gekennzeichnet, dass der Trägerfilm eine Dicke von 20 bis 30 µm besitzt.

5. Klebeband nach Anspruch 3, dadurch gekennzeichnet, dass der Trägerfilm aus Polyvinylchlorid oder Polypropylen besteht.

## Claimed

1. An adhesive tape comprising a support film (1, 4) of a synthetic thermoplastic polymer and, on one side (5) of the support film (1, 4) an adhesive layer (2, 9), characterized in that the support film (1, 4) has a thickness of less than 35 µm and possesses elevations (8) on the side (6) which is not provided with the adhesive layer (2, 9) the height of these elevations (8) being within the range of from 5 to 20 µm.

2. An adhesive tape according to claim 1, characterized in that one side (6) of the support film (1, 4) is provided with elevations (8), while the second side is provided with depressions (7) which are equal and opposite to said elevations (8), the elevations (8) have a height of 5 to 20 µm, and the adhesive layer (2, 9) is applied on the support film surface (5) showing depressions (7).

3. An adhesive tape according to claim 1 or 2, wherein the support film (1, 4) is biaxially stretch-oriented.

4. An adhesive tape according to claim 3, wherein the support film has a thickness of 20 to 30 µm.

5. An adhesive tape according to claim 3, wherein the support film is composed of polyvinylchloride or polypropylene.

## Revendications

1. Bande adhésive se composant d'un film porteur (1, 4) sous la forme d'une feuille réalisée dans un polymère synthétique thermoplastique et d'une couche adhésive (2, 9) appliquée sur l'une des faces (5) du film porteur (1, 4), caractérisée en ce que l'épaisseur du film porteur (1, 4) est inférieure à 35 µm et en ce que la face (6) opposée à la couche adhésive (2, 9) porte des élévations (8) dont la profondeur se situe entre 5 et 20 µm.

2. Bande adhésive selon la revendication 1, caractérisée en ce que le film porteur (1, 4) présente, sur l'une des faces (6) des élévations (8) et, sur le côté opposé, des enfoncements (7) présentant la forme inverse correspondante des élévations (8), en ce que la profondeur de ces élévations (8) se situe entre 5 et 20 µm et en ce que la couche adhésive (2, 9) est appliquée sur la face (5) du film porteur présentant des enfoncements (7).

3. Bande adhésive selon l'une des revendications 1 ou 2, caractérisée en ce que le film porteur (1, 4) a subi un drapage d'orientation biaxial.

4. Bande adhésive selon la revendication 3, caractérisée en ce que l'épaisseur du film porteur se situe entre 20 et 30 µm.

5. Bande adhésive selon la revendication 3, caractérisée en ce que la film porteur est en polychlorure de vinyle ou en polypropylène.

# Fig.1

*Fig. 2*